# FASCICULE DE BREVET EUROPEEN

(11) **EP 2 063 495 B1**
(45) Date de publication et mention de la délivrance du brevet: **24.11.2010**
(21) Numéro de dépôt: 08354077.3
(22) Date de dépôt: 21.10.2008
(51) Int. Cl.: H01R 13/53

(54) **Barre de connexion à interface plane**
Verbindungsleiste mit ebener Schnittstelle
Connection bar with flat interface

(30) Priorité: 20.11.2007 FR 0708126
(43) Date de publication de la demande: 27.05.2009
(73) Titulaire: Schneider Electric Industries SAS, 92500 Rueil-Malmaison (FR)
(72) Inventeur: Bonfils, Jean-Michel, 38050 Grenoble Cedex 09 (FR)
(74) Mandataire: Péru, Laurence

(56) Documents cités:
- EP-A- 0 563 535
- EP-A- 0 674 375
- US-A1- 2002 008 084
- US-A1- 2004 121 657
- US-A1- 2006 051 981
- US-A1- 2007 227 757

## Description

### DOMAINE TECHNIQUE

L'invention concerne la simplification de la connexion électrique par des barres et jeux de barres. Plus particulièrement, l'invention se rapporte à une barre de connexion blindée dont les interfaces de raccordement permettent une liaison électrique par contact entre surfaces planes. La forme et le matériau des interfaces sont choisis pour garantir la tenue diélectrique, en particulier pour des applications à haute et/ou moyenne tension ; notamment, les interfaces sont partiellement déformables, et l'isolant des barres est surmoulé sur le coeur conducteur avant d'être recouvert de préférence d'un blindage.

### ETAT DE LA TECHNIQUE

Dans les équipements électriques, en particulier dans les postes de transformation moyenne tension MT (aussi parfois appelés haute tension HT), c'est-à-dire de l'ordre de 5 à 52 kV, différents appareillages doivent être reliés électriquement entre eux ; qui plus est, au vu des tensions élevées, il est avantageux d'isoler les liaisons, et éventuellement de les blinder.

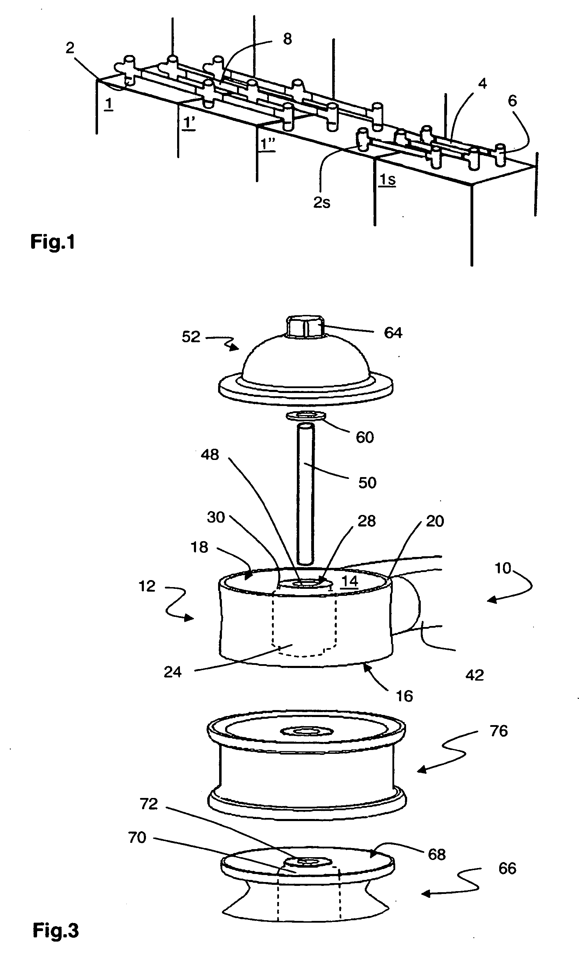

En particulier, tel que schématisé en figure 1, lorsque le courant est multiphasé, trois liaisons au moins sont impératives sur les appareillages 1 mis en série ou en parallèle par leurs bornes 2. Une option de liaison électrique (non illustrée) concerne l'utilisation de câbles flexibles raccordés sur les appareils 1 par l'intermédiaire de connecteurs rigides sur les bornes 2, dont un exemple est donné dans le document WO 02/0607385, avec un connecteur à nombreux composants. Un autre mode de liaison, également mentionné dans ce document, concerne l'utilisation de barres 4 rigides, ou semi-rigides, qui sont solidarisées entre les appareillages 1 ", 1s au niveau de bornes de connexion 2, par exemple par l'intermédiaire d'interfaces de type bicônes insérés 6 (tels que décrits dans le document FR 2 766 019). Une autre option intègre l'interface de connexion à des barres 8, avec présence d'épanouisseurs : l'interface de connexion se présente alors sous forme d'emboîtement, par exemple tel que décrit dans le document EP 0 674 375.

Le document EP-A-0 563 535 décrit une barre de connexion électrique comprenant: au moins deux dispositifs de raccordement; une tige conductrice reliant inserts de connexion de deux dispositifs de raccordement, ladite tige conductrice étant, pour ses parties d'extrémité, intégrée dans le support isolant des dispositifs de raccordement et, pour la partie résiduelle, intégrée à un revêtement isolant; dans laquelle les interfaces entre la tige conductrice et le revêtement isolant de la barre sont étanches.

Ces types de dispositifs de raccordement sont cependant encombrants, notamment en hauteur, afin de garantir une tenue diélectrique suffisante, notamment pour les applications moyenne tension : tel que rappelé dans le document WO 07/065912, la longueur de fuite doit être suffisante. De plus, les raccordements impliquent de nombreux éléments, et donc multiplient le nombre d'interfaces à contrôler.

En outre, les couplages par câbles nécessitent de nombreuses interfaces de connexion, complexes et coûteuses à mettre en place, notamment pour assurer une fiabilité adéquate pour les applications concernées ; du fait de leur rigidité, les barres ne tolèrent aucun désalignement, ce qui est particulièrement problématique lors de la multiplication des points de connexion et de leur mise en oeuvre.

### EXPOSE DE L'INVENTION

Parmi autres avantages, l'invention vise à pallier des inconvénients des moyens de connexion existants, et surtout à simplifier les procédés de raccordement tout en diminuant l'encombrement, notamment en hauteur, en résultant, en particulier pour les applications à haute (ou moyenne) tension. La liaison électrique est réalisée directement, sans pièce intermédiaire, entre des dispositifs de raccordement dont les surfaces actives sont superposables. Au vu de l'application préférée pour des tensions élevées, et de la nécessaire maîtrise du champ électrique, l'interface de contact est réalisée de façon à éviter la présence d'espaces susceptibles de générer des arcs électriques ; en outre, la surface est suffisamment étendue pour assurer la tenue diélectrique.

Plus particulièrement, selon un mode de réalisation préféré, l'invention concerne une barre de connexion électrique blindée comprenant une tige conductrice, revêtue d'un isolant, qui relie électriquement deux dispositifs de raccordement, avantageusement identiques. Chacun des dispositifs de raccordement comprend un support en matériau isolant susceptible d'être déformé, notamment par écrasement, qui est délimité par deux surfaces de raccordement opposées sensiblement parallèles, et un insert conducteur intégré dans le support isolant. L'insert, de préférence symétrique de révolution, s'étend entre deux surfaces de connexion planes parallèles qui débouchent sur les deux surfaces de raccordement isolantes du support ; sa longueur est inférieure à la distance entre les deux surfaces de raccordement lorsque le matériau isolant est au repos et, lors du raccordement, le support isolant est écrasé de sorte que la surface de connexion de l'insert conducteur, à chaque extrémité, affleure à la surface de raccordement, pouvant ainsi établir un contact entre surfaces planes. Le contact sert à la connexion électrique au niveau de l'insert conducteur et à l'étanchéité diélectrique au niveau du support isolant.

Un blindage est de préférence présent sur la surface externe de la barre de connexion, à l'exception des surfaces de raccordement et des surfaces de connexion des dispositifs de raccordement ; le blindage peut être limité aux dispositifs de raccordement.

Afin d'assurer une tenue diélectrique correcte de la barre de connexion, les interfaces entre composants isolants et conducteurs, ainsi qu'entre composants de même nature, sont contrôlées, en particulier étanches : le support isolant adhère sur l'insert conducteur, ainsi que sur la partie d'extrémité de la tige connectée à l'insert conducteur, le revêtement isolant adhère sur la partie résiduelle de la tige, ainsi que sur le support isolant, de sorte qu'il n'y a pas d'air résiduel. De préférence, les composants isolants, par exemple en élastomère de type EPDM ou silicone, sont surmoulés conjointement sur l'ensemble des composants conducteurs, avantageusement également fabriqués de façon unitaire. Le blindage consiste alors de préférence en un surmoulage du même élastomère, chargé afin d'assurer la conduction électrique, qui possède sensiblement les mêmes caractéristiques de déformation.

Pour assurer et maintenir la compression orthogonale du dispositif de raccordement, et donc le contact électrique, des moyens de serrage peuvent être prévus. Notamment, l'insert de connexion peut être percé de part en part, en particulier en son centre afin de pouvoir insérer un moyen de type vis ou goujon.

Par ailleurs, la barre peut être associée à un dispositif d'obturation qui vient se superposer à une surface d'un dispositif de raccordement inutilisée pour le raccordement électrique. Ce dispositif d'obturation comprend une surface isolante plane superposable à la surface du support, avantageusement rigide de façon à contribuer à l'écrasement et à minimiser les éventuelles fuites diélectriques. Avantageusement, le dispositif d'obturation est utilisé pour le serrage, et notamment il peut être associé, solidairement ou non, à un goujon fileté et à des moyens permettant le vissage du goujon dans l'orifice de l'insert de connexion.

De préférence, les surfaces opposées d'un support de raccordement sont sous forme de disques et l'insert de connexion y est centré. Une symétrie par rapport au plan médian de la barre est préférée.

Selon un mode de réalisation préféré, la tige de liaison est de section oblongue, présentant deux grands côtés parallèles aux surfaces de connexion des inserts des dispositifs de raccordement. De plus, dans une vue normale à ces surfaces de connexion, la tige et son revêtement peuvent présenter un profil droit en U, avec une partie centrale de la tige située à l'extérieur de l'enveloppe délimitée par les deux dispositifs de raccordement de ses extrémités, de sorte qu'il est possible d'intercaler une autre barre selon l'invention en alignant les dispositifs de raccordement et inversant l'orientation des U. Selon une première option, la tige est plane de sorte que les surfaces de connexion des inserts des deux dispositifs de raccordement sont parallèles et dans le même plan ; selon une deuxième option, la tige présente un épaulement, ou partie oblique, de sorte que les surfaces de connexion des inserts des deux dispositifs de raccordement sont décalées selon l'axe normal aux surfaces, de préférence avec une surface d'un dispositif de raccordement dans le même plan qu'une surface de l'autre dispositif de raccordement, de façon à pouvoir empiler les barres de connexion. Les modifications dans le nombre d'appareillages connectés sont ainsi en outre simplifiées.

L'invention se rapporte également à un jeu de barres, notamment de trois barres, dont les dispositifs de raccordement sont identiques.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1, déjà décrite, schématise les liaisons électriques entre appareils moyenne tension triphasés, qui peuvent être remplacées par des barres de connexion selon l'invention.
Les figures 2A, 2B, 2C montrent une barre selon un mode de réalisation préféré de l'invention, ainsi que la connexion entre deux barres au niveau d'un de leurs dispositifs de raccordement.
La figure 3 montre, de façon éclatée, les différents composants pouvant être utilisés pour le raccordement électrique d'une borne avec une barre selon l'invention.
Les figures 4A et 4B représentent deux vues du raccordement de trois appareils similaires à celui de la figure 1 par des barres selon un mode de réalisation de l'invention.

### DESCRIPTION DETAILLEE D'UN MODE DE REALISATION PREFERE

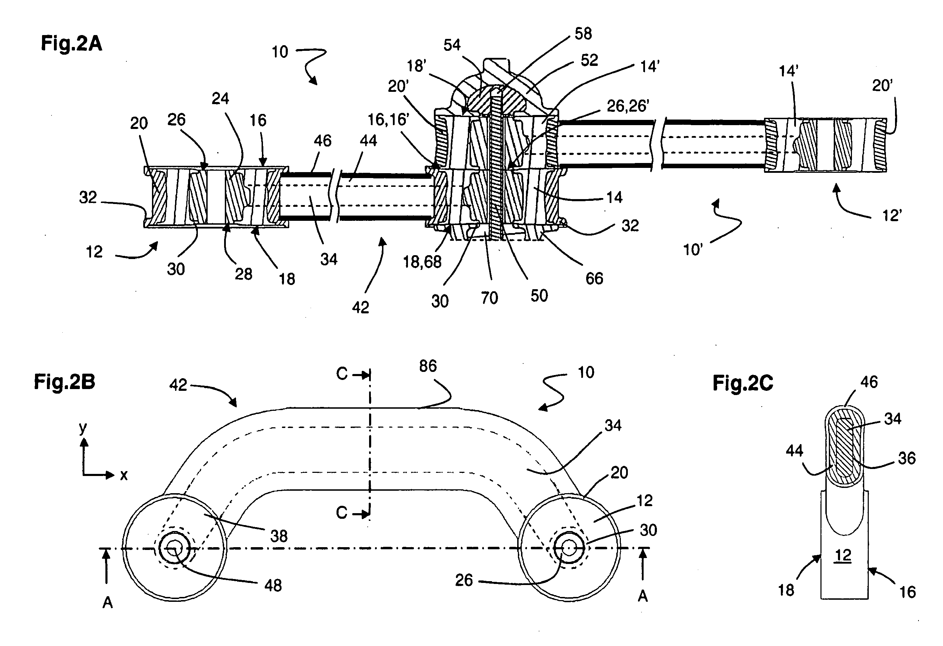

Une barre de connexion 10 selon l'invention peut être utilisée pour relier entre elles les bornes de connexion de plusieurs appareils électriques 1 ; elle est particulièrement adaptée pour les appareillages illustrés en figure 1, dans lesquels deux bornes 2 sont reliées pour mettre les appareils en série ou en parallèle. Bien que non décrit, une barre 10 selon l'invention pourrait comprendre, comme la barre 8 illustrée, une pluralité de dispositifs de raccordement 12, par exemple trois. Cependant, au vu de la simplicité de connexion des barres 10, 10' selon l'invention, et pour bénéficier pleinement des tolérances dans l'alignement ainsi que de la réduction du nombre de références industrielles, une barre 10 selon l'invention n'est, de préférence, munie de dispositifs de raccordement 12 qu'à ses deux extrémités ; la présence d'un troisième dispositif de raccordement correspond à une liaison de deux barres 10, 10', par superposition simple, tel qu'illustré en figure 2A.

Selon l'invention, un dispositif de raccordement 12 comprend principalement un support 14 en matériau isolant. Bien qu'il puisse être de forme quelconque (sous les réserves expliquées plus tard concernant la taille et la tenue diélectrique), le support isolant 14 comprend deux surfaces opposées 16, 18, destinées au raccordement, qui sont sensiblement planes et parallèles l'une à l'autre ; il est préféré que les surfaces de raccordement 16, 18 soient circulaires, forme la plus adaptée pour gérer les différents phénomènes diélectriques et optimiser l'orientation des empilements. De même, il est avantageux que les deux surfaces opposées 16, 18 d'un support isolant 14 soient superposables de sorte que la barre 10 peut être utilisée sans orientation préférée ; il est de toute façon préféré que la barre 10 soit symétrique, avec tous ses dispositifs de raccordement 12 identiques, leurs surfaces de raccordement 16, 18 étant parallèles entre elles.

Le support isolant 14, à l'exception des surfaces de raccordement 16, 18, est avantageusement revêtu d'une couche 20 conductrice ou semi-conductrice sur sa surface externe. L'épaisseur est suffisante pour assurer un blindage électrostatique de l'ensemble : le maintien du champ électrique à l'intérieur du support isolant 14 permet d'augmenter la compacité des raccordements effectués par une barre 10 selon l'invention munie d'un tel dispositif 12 ; il peut être souhaitable de procéder à un retour de blindage sur la périphérie de la surface isolante de raccordement 16, 18, afin d'assurer une continuité de blindage lors du contact avec une autre surface similaire 16'.

Le dispositif de raccordement 12 comprend en outre un insert de connexion 24 de forte conductivité électrique, usuellement en cuivre ou en aluminium, qui traverse le dispositif de raccordement 12 dans son épaisseur, entre deux surfaces de connexion 26, 28 planes et parallèles qui sont accessibles de chaque côté du support isolant 14. Avantageusement, l'insert de connexion 24 est centré au sein du support isolant 14, et symétrique de révolution afin de maîtriser au mieux les contraintes diélectriques.

Pour optimiser la tenue diélectrique, l'insert de connexion 24 est intégré au support isolant 14, et notamment le matériau isolant est surmoulé sur l'insert 24 de sorte que l'interface entre les deux composés 14, 24 soit maîtrisée et exempte d'espaces vides (ou remplis d'air). Pour les mêmes raisons, il est avantageux que l'insert de connexion 24 comprenne un renflement au sein du support isolant 14, son diamètre central étant ainsi supérieur au diamètre des surfaces de connexion 26, 28, au niveau desquelles le matériau isolant forme un col, ou un goulot, 30 autour de l'insert : l'insert conducteur 24 est en quelque sorte enrobé, « noyé », dans le matériau isolant 14.

La taille du support isolant 14, ainsi que l'épaisseur du goulot 30, dépend de la taille de l'insert conducteur 24, elle-même déterminée par le niveau du courant qui y circule, et des contraintes électromécaniques. Suivant l'espace disponible, il est possible que le support 14 ait une forme cylindrique, par exemple de révolution, mais, pour diminuer la quantité de matériau et l'encombrement, une gorge peut être formée entre les deux surfaces de raccordement 16, 18. Pour faciliter la superposition, la mise en contact et/ou l'alignement, un dispositif de raccordement 12 peut comprendre des moyens de guidage périphérique 32, par exemple un rebord formé par le blindage 20.

Les dispositifs de raccordement 12 d'une même barre 10 sont reliés entre eux par une tige 34 de forte conductivité électrique connectée, et de préférence unitaire, avec l'insert de connexion 24. La tige 34, en cuivre ou en aluminium, est dimensionnée en fonction du courant y transitant, et elle est avantageusement « rigide », c'est-à-dire non compressible ; cependant, pour assurer une certaine souplesse correspondant à une tolérance dans le positionnement relatif des dispositifs de raccordement 12 dans le sens de la connexion (orthogonal aux surfaces de raccordement 16 et de connexion 26), de préférence, la section de la tige 34 est « aplatie », de forme oblongue, tel qu'illustré en figure 2C ; notamment la tige 34 est un méplat, de préférence à chants ronds : les grands côtés 36 du méplat sont sensiblement parallèles aux surfaces de raccordement 16, 18 de sorte à pouvoir tolérer un léger écart à l'alignement des surfaces de connexion 26, 28 dans leur plan. Cette forme est particulièrement avantageuse du fait qu'elle diminue en outre les efforts électrodynamiques sur la tige de cuivre 34.

La tige de liaison conductrice 34 est elle aussi intégrée à ses extrémités 38 dans l'isolant 14 du dispositif de raccordement 12 (figure 2B) ; sur le reste de sa longueur, la partie résiduelle 42 correspondant à la longueur apparente de la tige 34 est revêtue d'un isolant 44 qui assure une tenue diélectrique suffisante. Pour restreindre l'encombrement nécessaire autour de la barre 10, un blindage électrostatique 46 de la partie résiduelle 42 peut également être mis en place. De préférence, l'ensemble des composants isolants 14, 44 de la barre de connexion 10 est surmoulé en une étape sur l'ensemble des éléments conducteurs 24, 34 ; de même, le blindage 20, 46 est de préférence unitaire.

Pour éviter les amorçages lors du raccordement électrique et assurer un contact étanche entre les dispositifs de raccordement 12, 12' superposés des deux barres 10, 10' tel qu'illustré en figure 2A, le matériau isolant des supports 14 est déformable, et notamment son épaisseur peut être diminuée par écrasement orthogonal entre les deux faces opposées 16, 18 ; par exemple il s'agit d'un élastomère dont les qualités diélectriques sont connues et optimisées, notamment en ce qui concerne la compacité. En particulier, le support 14 est surmoulé par un polymère d'éthylène-propylène-diène ou EPDM (pour: « *Ethylene-Propylene Diene Monomer rubber* »), ou par du silicone.

La hauteur de l'insert conducteur 24, définie par la distance entre ses deux surfaces de connexion 26, 28, est donc inférieure à l'épaisseur du support isolant 14 au repos; une compression orthogonale du support isolant 14 peut rapprocher les surfaces de raccordement 16, 18 du support 14 pour que leur écartement soit égal à ladite hauteur : en usage, les surfaces isolantes 16, 16' sont mises en contact, une déformation est assurée jusqu'à ce que les surfaces de connexion 26, 26' conductrices de l'insert 24 soient en contact l'une avec l'autre, et l'assemblage est maintenu dans cette position par des moyens de serrage tant que le raccordement électrique est souhaité.

Pour maintenir la déformation des deux supports isolants 14, 14' et donc le contact entre les surfaces de connexion 26, 26' des inserts 24, 24' juxtaposés, un serrage est réalisé. Plusieurs options sont possibles, avec par exemple des excroissances latérales munies de boulons externes au dispositif de raccordement 12. Avantageusement, et tel que présenté en figure 3, l'insert de connexion 24 est percé d'un orifice central 48, par exemple fileté, dans lequel peut se mettre en place un moyen de serrage, de type boulon ou goujon 50. Même si l'orifice 48 peut tolérer un certain jeu pour faciliter la mise en place et le raccordement, cette option permet en outre un centrage et donc une optimisation du contact entre les deux supports isolants 14, 14' et leur blindage 20, 20'.

Les efforts de mise en place et de frottement sont très limités compte tenu du contact entre surfaces planes ; l'utilisation de graisse ou de fil de dégazage n'est ainsi plus nécessaire dans le raccordement selon l'invention. Il peut être avantageux d'avoir un léger gradient d'épaisseur décroissant depuis la périphérie vers le centre du support isolant 14, de façon à assurer une répartition homogène des efforts de pression de contact (l'évacuation de l'air entre les parties isolantes 26, 26' étant alors réalisée dans la cavité interne 48 de l'insert 24). A l'inverse, une des deux surfaces 26' peut présenter un gradient d'épaisseur croissant depuis la périphérie vers le centre du support isolant 14 pour, parallèlement à la compression, également évacuer l'air éventuellement présent en surface vers l'extérieur.

Ainsi, en ce qui concerne une fabrication préférée d'une barre 10 selon l'invention, le coeur conducteur (inserts + tige) 24, 34 est d'abord réalisé, en cuivre ou en aluminium, par les techniques existantes, par exemple en matrice ou par moulage. Cet ensemble est surmoulé avec un isolant 14, 44 de type élastomère EPDM ou silicone, avec avantageusement présence d'un agent d'adhérisation pour assurer une interface cohésive et sans défaut entre coeur conducteur et revêtement isolant. Le blindage 20, 46 peut être réalisé, par exemple sur une surface externe ébavurée, par une métallisation ou de préférence par un surmoulage avec un élastomère de même type mais chargé, ce qui permet de conserver les mêmes propriétés de déformation sur l'ensemble du dispositif de raccordement 12, entre corps isolant 14 et blindage 20.

Dans un mode de réalisation préféré, une barre de connexion 10 pour des bornes distantes de 350 mm pouvant fonctionner à 24 kV (respectivement 15 kV) et 630 A comprend deux dispositifs de raccordement 12, dont les surfaces de raccordement 16, 18 sont des disques de diamètre de l'ordre de 105 mm (respectivement 80 mm), distants de, par exemple, environ 40 min, épaisseur du support isolant 14 en EPDM. Le dispositif de raccordement 12 comprend un insert 24 en cuivre de hauteur similaire mais inférieure à la distance séparant les deux surfaces de raccordement 16, 18 et ses surfaces de connexion 26, 28, correspondant à un évidement dans les surfaces de raccordement 16, 18 du support isolant 14, sont des disques de diamètre de l'ordre de 25 mm. Ainsi, lors de la connexion électrique, l'isolant 14 est aplati de la différence de hauteur entre les surfaces de connexion et de raccordement sur chaque face, par exemple de l'ordre de deux fois 0,5 mm. La tige 34, de section oblongue avec les petits côtés sous forme de demi-cercles, est revêtue du même isolant 44. L'ensemble est blindé 20, 46, avec un retour de blindage d'environ 0,5 mm sur la périphérie des surfaces de raccordement 16, 18 pour assurer la continuité de blindage.

Pour assurer l'isolation de la surface 18 du dispositif de raccordement 12 qui reste libre (opposée dans le cadre illustré à la surface 16 de connexion électrique), un dispositif d'obturation 52 se positionne sur cette surface libre 18 ; ce dispositif 52 peut en outre assurer la compression et le maintien en position serrée de l'assemblage. Le dispositif d'obturation 52 comprend en particulier une surface plane de taille au moins égale à la surface de raccordement 18 à laquelle il est destiné ; de préférence, il s'agit d'un couvercle isolant dont la forme est optimisée pour la tenue diélectrique, qui peut par exemple être revêtu d'une métallisation de blindage électrostatique, de préférence agencé pour une continuité de blindage avec le dispositif de raccordement 12. Il est préféré, pour assurer une étanchéité et une protection maximale contre les amorçages, que le matériau du dispositif d'obturation 52 soit non déformable, par exemple un matériau thermodurcissable de type thermoplastique, ou époxy, ou polyester.

De préférence, pour assurer la déformation du support 14 du dispositif de raccordement 12 qu'il protège, et pour maintenir cet état, le dispositif d'obturation 52 peut être associé à une tige filetée coopérant avec l'orifice 48 de l'insert de connexion 24. Notamment, un insert rigide 54 muni d'un orifice taraudé 58 est mis en place au centre du couvercle 52, par exemple surmoulé de manière cohésive ; l'orifice 58 est adapté pour coopérer avec le goujon de serrage 50, qui peut même y être monté imperdable, traversant l'orifice 48 de l'insert 24 : le même élément 50 permet ainsi le serrage du couvercle 52 sur le dispositif de raccordement 12. Comme il ne s'agit pas ici de réaliser la connexion électrique, l'insert 54 peut être de forme quelconque et/ou en matériau différent de type acier ; il est de préférence métallique afin d'assurer un rôle de déflecteur diélectrique et une qualité d'ancrage optimale pour la solidité du serrage ; une rondelle élastique 60 peut lui être associée, éventuellement également montée de façon imperdable.

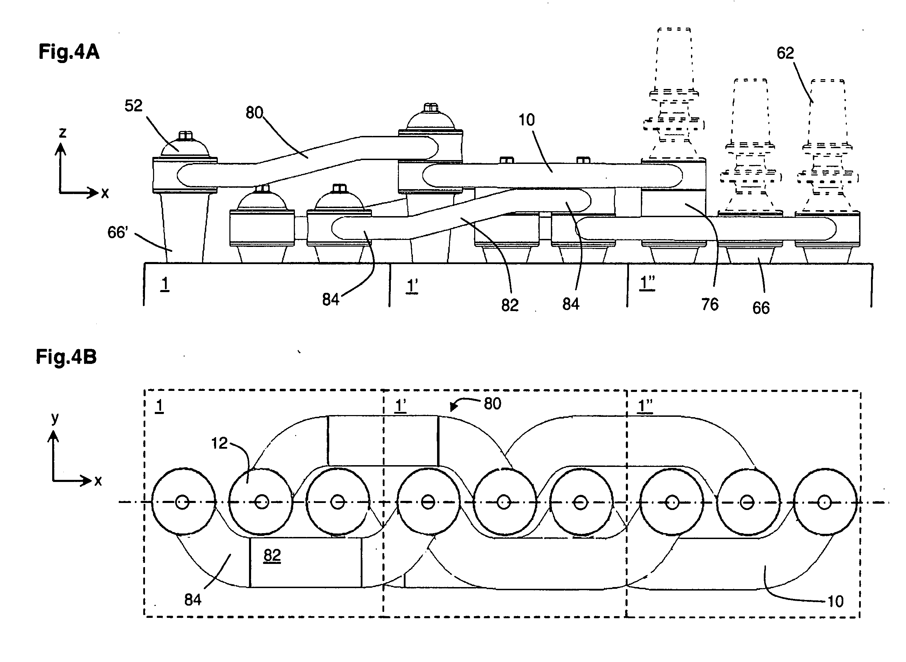

Suivant l'utilisation, il est possible de modifier le couvercle d'obturation et de serrage 52, notamment dans le cas où des câbles d'arrivée de courant sont prévus : au lieu du couvercle décrit, une interface 62 au format standard conique (par exemple de type C selon la norme NFC33051, ou autre) peut être mise en place : voir schéma en pointillés figure 4A.

De préférence, pour le mode de réalisation préféré illustré et présenté plus haut, les moyens de serrage 50 ne sollicitent par directement les dispositifs de raccordement 12 des barres 10 : le goujon 50 est de diamètre inférieur au diamètre de l'orifice 48 des inserts 24, qui n'est pas fileté, ce qui permet d'offrir une tolérance de positionnement des équipements 1 reliés entre eux ; sa longueur dépend du nombre de dispositifs de raccordement 12, 12' superposés, ainsi que de la longueur des orifices d'ancrage 58 des dispositifs d'obturation 52 l'entourant. Le couvercle 52 comprend par ailleurs avantageusement des moyens de vissage, par exemple une excroissance 64 à six pans susceptible de coopérer avec une clé permettant la rotation de l'ensemble couvercle 52 / rondelle 60 / goujon 50 pour assurer la compression des supports isolants 14 dispositifs de raccordement 12.

Un dispositif d'obturation 52 peut être prévu de chaque côté de l'assemblage de dispositifs de raccordement superposés 12, 12' s'il s'agit par exemple d'allonger la barre de connexion 10 ou de pré-assembler une connexion en « Y », en té ou en croix par un ensemble de barres. Cependant, dans la majorité des cas, le dispositif de raccordement 12 d'une barre 10 selon l'invention est destiné à se connecter sur une borne d'un appareillage électrique 1. Pour la simplicité d'assemblage, il est préféré que les deux faces opposées I6, 18 des dispositifs de raccordement 12 des barres 10 selon l'invention soient identiques : il apparaît donc que la connexion sur une borne d'un appareillage électrique 1 est réalisée également par contact et compression, c'est-à-dire de façon différente de l'art antérieur. Il est possible de mettre en place un adaptateur comportant une interface plane et une interface conique sur une borne de type existant.

Il est cependant avantageux que le raccordement électrique à une borne d'une barre 10 selon l'invention se fasse également directement, par contact et compression, avec modification adaptée des bornes des appareillages électriques 1, et notamment « aplatissement ». Dans le mode de réalisation préféré illustré en figures 2 et 3, la borne 66 comprend, de façon similaire au dispositif de raccordement 12, une surface de contact 68 superposable à la surface 18 du support 14 du dispositif de raccordement 12 de la barre 10, et sur laquelle débouche un insert de connexion 70, de préférence muni d'un orifice taraudé 72 correspondant à l'orifice taraudé 58 du dispositif d'obturation 52. La borne 66 est principalement composée d'un matériau isolant surmoulé sur l'insert 70, et présente avantageusement un creux déflecteur sous la surface de contact 68 qui optimise les caractéristiques diélectriques ; l'insert 70 comprend lui aussi avantageusement un renflement sous la surface de contact 68 isolante pour optimiser les propriétés diélectriques. Comme pour le couvercle 52, le matériau est de préférence non déformable, de type thermodur ou thermoplastique ; la borne 66 peut être également blindée, de préférence par un revêtement de métallisation, avec une éventuelle continuité de blindage assurée par un retour métallique périphérique sur la surface de contact 68. Selon l'utilisation de la borne 66, l'insert 70 se prolonge dans l'appareillage 1 tel qu'usuel vers le système d'alimentation.

De façon générale, la connexion entre deux bornes 66 par une barre 10 selon l'invention est réalisée simplement, par positionnement des dispositifs de raccordement 12 sur les bornes 66 avec, notamment en l'absence de moyens de guidage 32, un éventuel glissement pour le centrage, et serrage par un dispositif d'obturation 52 avec le goujon 50 traversant l'orifice 48 et s'ancrant dans l'orifice taraudé 72 : le procédé est donc simplifié, avec en outre possibilité de jeu latéral. De plus, dans le cas où les tiges de liaison 34, 34' des barres 10, 10' sont plates et présentent une certaine souplesse, un jeu dans le sens de serrage est permis (c'est-à-dire dans la hauteur relative des bornes 66 des appareillages électriques 1).

Cette souplesse peut être insuffisante, notamment lors de la connexion de plusieurs modules et de la superposition de barres, et une barre coudée peut s'avérer une option intéressante : de fait, la première barre 10 de la figure 2A est nécessairement décalée dans le sens orthogonal à la surface de raccordement 18 par rapport à la deuxième barre 10', du fait que leurs dispositifs de raccordement 12, 12' sont superposés : entre les premier et dernier dispositifs de raccordement 12, 12' des deux barres 10, 10', un écart de l'épaisseur du dispositif de raccordement 12 est présent. Il est certes possible de modifier les bornes des appareillages en les allongeant (voir borne 66' de la figure 4A), pour permettre de rehausser une liaison indépendante ; cette solution est cependant lourde à mettre en place et figée. Selon une option de l'invention, des plots 76 rehausseurs de bornes 66 sont prévus : ils correspondent sensiblement aux dispositifs de raccordement 12, sans prolongation par une tige de liaison 34 : voir figure 3.

Selon une autre option préférée de l'invention, certaines barres de connexion 10 sont telles que les deux dispositifs de raccordement sont dans le même plan (figure 2) et d'autres barres de connexion 80 comprennent une tige 34 présentant un épaulement 82, c'est-à-dire une partie inclinée par rapport au plan défini par les surfaces de connexion 26 (figure 4A). Pour résoudre le problème illustré en figure 2A, l'épaulement 82 de la tige de liaison 34, dans le sens orthogonal aux surfaces de raccordement 16, 18, correspond à l'épaisseur d'un insert de connexion 24 ; la longueur de l'épaulement 82 dans le sens longitudinal de la tige 34 est optimisée pour la continuité diélectrique, la conduction,.... De préférence, la partie 82 inclinée par rapport aux surfaces de contact 16, 18 est centrée sur la tige de liaison 34, et sa longueur peut par exemple être de l'ordre de la moitié de la distance séparant deux inserts de connexion 24 : dans le mode de réalisation préféré précédent, on a donc une tige 34 présentant deux parties d'extrémité 84 parallèles au premier dispositif de raccordement 12 et reliées par une partie 82 inclinée.

Par ailleurs, en particulier pour les appareillages modulaires, il est possible de minimiser l'encombrement général de raccordement grâce au système selon l'invention. En effet, alors que les solutions précédentes imposaient un décalage entre bornes 2 pour positionner les barres 4, 8, grâce à la planéité de la connexion selon l'invention, il est possible de gérer différentes orientations relatives des barres 10, et notamment de procéder à des raccordements en parallèle sur des bornes 66, 66' alignées d'appareillages 1 conformes à la figure 1.

En particulier, tel qu'illustré en figures 4, en configurant les barres de connexion 10, 80 de façon standardisée, il est possible d'imbriquer les dispositifs de raccordement 12 et, dans le cas illustré, de procéder à trois connexions de trois bornes alignées : la tige de liaison 34 entre dispositifs de raccordement 12 d'un mode de réalisation préféré d'une barre 10, 80 selon l'invention est courbée pour former un U qui permet la mise en place d'un dispositif de raccordement 12 d'une autre barre 10, 80 entre ses deux extrémités. Tel qu'illustré en figures 2B et 4B, la tige 10 comprend ainsi une partie centrale 86 entre les deux parties d'extrémité 38 reliées aux inserts 24 des dispositifs de raccordement 12. La partie centrale 86 de la tige 34 est, vue selon la normale aux surfaces de raccordement 16, 18, externe à l'enveloppe définie par les deux dispositifs de raccordement 12 de ses extrémités, de sorte qu'une autre barre de connexion 10 selon l'invention peut être mise en place, de façon symétrique, et croiser la première.

Ce mode de réalisation préféré permet ainsi un encombrement restreint. En particulier, pour la connexion illustrée en figures 4A et 4B, l'encombrement en largeur y, dans le plan (x,y) des surfaces de raccordement 16, peut être inférieur à deux fois l'encombrement des bornes 66 elles-mêmes ; de plus, l'encombrement en hauteur z, entre la surface supérieure de la borne 66 et le point extrême d'un dispositif d'obturation 52 lorsque deux barres 10, 10' sont superposées, peut être inférieur à 200 mm.

Par ailleurs, tel que précisé plus haut, le positionnement des bornes 66 à raccorder peut être décalé de la localisation idéale avec une tolérance accrue. Dans le même mode de réalisation, un jeu au moins égal à ± 1,5 mm dans le sens de la largeur x est toléré pour chaque dispositif de raccordement 12, soit un défaut de positionnement de 3 mm par rapport à la droite idéale de raccordement illustrée en figure 4B ; la tige 34 elle-même, grâce à sa courbure 86, permet une différence de longueur x de connexion sensiblement équivalente. De plus, grâce à la forme plate de la tige 34 et au surmoulage en élastomère « adhérisé », un défaut de positionnement en hauteur z entre deux pôles de deux cellules à connecter est toléré.

Pour ce type d'assemblage modulaire 1, 1', 1 ", il est en outre possible, grâce aux barres de connexion 10, 80 selon l'invention, de modifier le nombre de modules de façon tardive, notamment d'en permettre une extension 1s aisée ; plus généralement, toute modification dans les agencements de connexions est simplifiée. En particulier, l'ajout d'une cellule 1s dans un tableau électrique pour augmenter la puissance consiste simplement à : retirer trois couvercles 52 d'une cellule d'extrémité, insérer trois barres de connexion 10, 80, avec éventuel couplage d'un plot/disque rehausseur 76 sur une borne 66, puis revisser les trois couvercles 52 dévissés, ainsi que trois couvercles sur les dispositifs de raccordement 12 mis en place sur les bornes 66 de la nouvelle cellule d'extrémité ; il n'est plus nécessaire de changer les barres 8 totalement ou de prévoir des bornes additionnelles 2s pour connexions éventuelles. Il est également possible de modifier les couvercles 52 pour les remplacer par des arrivées de câbles 62 au besoin.

Ainsi, dans le système selon l'invention, peu de pièces assurent les fonctions principales de raccordement : le contact et la liaison électrique sont réalisés par le retrait de l'insert conducteur 24 par rapport à l'élastomère 14 sur la surface 16 assurant la déformation dudit élastomère avant la mise en contact électrique ; l'étanchéité des interfaces est gérée par la déformation élastique et l'adhérence du surmoulage en élastomère isolant qui garantit simultanément l'isolation diélectrique de la barre 34 et des inserts de connexion 24 ; le serrage est assuré par un simple vissage ; la maîtrise des contraintes diélectriques est assurée par une conception adaptée des différents composants et interfaces, notamment leur forme, nature et positionnement avec un enrobage 30 des conducteurs de connexion 14, 34 dans l'isolant 12, 42 et un éventuel blindage électrostatique 20, 46 qui contribue à la robustesse du système.

Une modification du type décrit ci-dessus peut également être apportée à d'autres composants d'une connexion électrique, afin par exemple d'être reliés à une borne 66 « aplanie » et/ou une barre 10 selon l'invention, notamment avec un dispositif d'obturation 52. En particulier, il est possible d'adapter les éléments de raccord coniques de câbles en les « aplatissant ». Ainsi, un élément de raccord plan comprend une partie de raccordement similaire au dispositif de raccordement 12 ou à un plot rehausseur 76 tels que précédemment décrits, dans lesquels l'insert conducteur 24 est prolongé latéralement par un dispositif de couplage d'un câble lui aussi enrobé dans le même matériau compressible 14 pour former une partie de couplage. La partie de couplage, éventuellement blindée, forme alors un manchon, débouchant par un orifice de passage, surmoulé autour du dispositif de couplage de forme tubulaire et pouvant accepter une extrémité de câble de type cosse. Ainsi, pour être raccordé, le câble est muni à une extrémité d'un élément de connexion de type cosse, puis inséré à force dans le manchon en matériau compressible jusqu'à couplage entre l'élément de connexion et le dispositif de couplage, et de façon à assurer une interface étanche au niveau de l'orifice du manchon et au niveau de l'insert 24. Le raccord ainsi formé peut ensuite être mis en place sur une borne 66, un autre raccord et/ou un dispositif de raccordement 12 d'une barre 10 selon l'invention, avec compression orthogonale de sa surface de raccordement jusqu'à ce que son insert soit en contact avec l'autre insert à relier.

La barre de connexion 10, 10', 80 selon l'invention permet, parmi autres avantages, de :
- supprimer de nombreuses pièces auparavant indispensables aux raccordements tels les manchons intermédiaires, et donc réduire les coûts tout comme les risques d'oubli de pièces ;
- simplifier l'interface et donc augmenter la fiabilité de mise en place ;
- gagner du temps lors des raccordements, notamment grâce à une connexion par simple contact et un serrage aisé, avec évacuation de l'air à l'interface sans aide ni lubrification grâce à une compression optimale plane et non plus conique ;
- supprimer les risques d'amorçage, même en présence de points triples, du fait de la présence de déflecteurs de contraintes diélectriques ;
- réduire le temps d'installation grâce à une meilleure gestion des défauts d'alignement entre les composants à connecter. En particulier, il est possible d'autoriser deux degrés de liberté dans l'assemblage du fait de l'utilisation d'interfaces planes non coniques, et de l'éventuel glissement d'une liaison sur l'autre ; un troisième degré de liberté partiel, par l'utilisation d'une barre métallique de forme plate et un isolant souple solidarisé, permet des ajustements en hauteur ainsi que de légers défauts d'angle des plages de connexion en sortie d'appareillage ;
- réduire l'encombrement, notamment la hauteur de connexion, de sorte qu'il est possible de superposer « sans limites » les barres de connexion du fait de la diminution du nombre d'interfaces ;
- augmenter la compacité des appareillages étant donné que l'alignement des pôles est désormais permis pour la connexion de cellules ;
- s'adapter à de nombreuses configurations malgré un nombre réduit de composants ;
- permettre de procéder rapidement à des modifications ou extensions de configurations de tableaux.

Bien que l'invention ait été décrite en référence à des barres de connexion de cellules moyenne tension, elle ne s'y limite pas : d'autres systèmes peuvent être concernés par l'invention.

## Revendications

1. Barre de connexion électrique (10) comprenant :
- au moins deux dispositifs de raccordement (12), qui comprennent chacun un support (14) en matériau isolant susceptible d'être déformé et délimité par deux surfaces de raccordement (16, 18) opposées sensiblement parallèles, et un insert de connexion (24) conducteur intégré dans le support isolant (14) et débouchant sur les deux surfaces de raccordement (16, 18) au niveau de deux surfaces de connexion (26, 28) planes parallèles, la hauteur de l'insert (24) entre ses deux surfaces de connexion (26, 28) étant inférieure à la distance entre les deux surfaces de raccordement (16, 18) lorsque le matériau isolant du support (14) est au repos, et supérieure ou égale à ladite distance lorsque le matériau est entièrement déformé par compression entre ses surfaces de raccordement (16, 18) ;
- une tige conductrice (34) reliant les inserts de connexion (24) de deux dispositifs de raccordement (12), ladite tige conductrice (34) étant, pour ses parties d'extrémité (38), intégrée dans le support isolant (14) des dispositifs de raccordement (12) et, pour la partie résiduelle (42), intégrée à un revêtement isolant (44) ;
dans laquelle les interfaces entre les supports isolants (14), les inserts conducteurs (24), la tige conductrice (34) et le revêtement isolant (44) de la barre (10) sont étanches.

2. Barre selon la revendication 1 dans laquelle la tige de liaison (34) est unitaire avec les inserts de connexion (24), et les supports isolants (14) sont unitaires avec le revêtement (44) de la tige de liaison (34).

3. Barre selon la revendication 2 dans laquelle le matériau isolant (14, 44) est un élastomère surmoulé sur les éléments conducteurs (24, 34).

4. Barre selon la revendication 3 comprenant en outre, sur une partie au moins de la surface externe de la barre (10), un surmoulage de l'élastomère chargé pour être conducteur (20, 46) servant de blindage électrostatique.

5. Barre selon l'une des revendications 1 à 3 comprenant en outre un blindage électrostatique (20, 46) sur la surface externe de la barre de connexion (10), à l'exception des surfaces de raccordement (16, 18) et des surfaces de connexion (26, 28) des dispositifs de raccordement (12).

6. Barre selon l'une des revendications 1 à 5 dans laquelle les deux surfaces opposées de raccordement (16, 18) et les deux surfaces de connexion (26, 28) d'au moins un dispositif de raccordement (12) sont sous forme de disques concentriques, de préférence superposables.

7. Barre selon l'une des revendications 1 à 6 dans laquelle le support isolant (14) des dispositifs de raccordement (12) forme un col (30) au niveau des extrémités (26, 28) de l'insert de connexion (24), se sorte que ledit insert (24) est enrobé dans le matériau isolant.

8. Barre (10) selon l'une des revendications 1 à 7 dans laquelle les surfaces de connexion (26, 28) des inserts (24) des deux dispositifs de raccordement (12) sont parallèles et dans le même plan. ,

9. Barre (80) selon l'une des revendications 1 à 7 dans laquelle les surfaces de connexion (26, 28) des inserts (24) des deux dispositifs de raccordement (12) sont parallèles et décalées entre les deux dispositifs de raccordement (12) selon l'axe normal auxdites surfaces (26, 28), la tige de liaison (34) comprenant un épaulement (82).

10. Barre selon l'une des revendications 1 à 9 dans laquelle la tige de liaison (34) est un méplat dont les deux grandes surfaces (36) sont sensiblement parallèles aux surfaces de connexion (26, 28) des inserts (24) des dispositifs de raccordement (12).

11. Barre selon l'une des revendications 1 à 10 dans laquelle la tige de liaison (34) est en forme de U avec une partie centrale (86) entre ses parties d'extrémité (38) de sorte que, dans une vue normale aux surfaces de connexion (26, 28), la partie centrale (86) de la tige (34) est à l'extérieur de l'enveloppe délimitée par les deux dispositifs de raccordement (12).

12. Barre selon l'une des revendications 1 à 11 comprenant en outre des moyens de serrage (48, 50) des dispositifs de raccordement (12) dans la direction orthogonale aux surfaces de connexion (26, 28).

13. Barre selon la revendication 12 dans laquelle les moyens de serrage d'au moins un dispositif de raccordement (12) comprennent un orifice (48) au sein de l'insert de connexion (24).

14. Barre selon l'une des revendications 12 ou 13 comprenant en outre un dispositif d'obturation (52) pour un dispositif de raccordement (12), le dispositif d'obturation (52) comprenant une surface plane isolante superposable sur la surface (18) du support (14) à laquelle il est destiné.

15. Barre selon la revendication 14 dans laquelle le dispositif d'obturation (52) est muni d'un insert (54) comprenant un orifice fileté (58), l'insert de connexion (24) du dispositif de raccordement associé (12) comprend un orifice (48), ladite barre étant associée à un goujon (50) coopérant avec lesdits orifices (58, 48) pour assurer le serrage.

16. Jeu comprenant plusieurs barres selon l'une des revendications 1 à 15 dans lequel tous les dispositifs de raccordement (12, 12') sont superposables.

## Claims

1. Electrical connecting bar (10) comprising:
- at least two connecting devices (12) which each comprise a support (14) made of insulating material that is able to be deformed and delineated by two substantially parallel opposite connection surfaces (16, 18), and a conducting connecting insert (24) integrated in the insulating support (14) and opening out onto the two connection surfaces (16, 18) at the level of two parallel flat connection surfaces (26, 28), the height of the insert (24) between its two connection surfaces (26, 28) being smaller than the distance between the two connection surfaces (16, 18) when the insulating material of the support (14) is at rest, and greater than or equal to said distance when the material is completely deformed by compression between its connection surfaces (16, 18);
- a conducting rod (34) joining the connecting inserts (14) of two connecting devices (12), said conducting rod (34), as far as its end parts (38) are concerned, being integrated in the insulating support (14) of the connecting devices (12) and, as far as its residual part (42) is concerned, being integrated in an insulating coating (44);
wherein the interfaces between the insulating supports (14), conducting inserts (24), conducting rod (34) and insulating coating (44) of the bar (10) are air-tight.

2. Bar according to claim 1 wherein the connecting rod (34) is unitary with the connecting inserts (24), and the insulating supports (14) are unitary with the coating (44) of the connecting rod (34).

3. Bar according to claim 2 wherein the insulating material (14, 44) is an elastomer molded from casting on the conducting elements (24, 34).

4. Bar according to claim 3 further comprising, on at least a part of the external surface of the bar (10), molding from casting of the elastomer charged to be conducting (20, 46) acting as electrostatic shielding.

5. Bar according to one of claims 1 to 3 further comprising an electrostatic shielding (20, 46) on the external surface of the connecting bar (10), with the exception of the connection surfaces (16, 18) and of the connection surfaces (26, 28) of the connecting devices (12).

6. Bar according to one of claims 1 to 5 wherein the two opposite connection surfaces (16, 18) and the two connection surfaces (26, 28) of at least one connecting device (12) are in the form of preferably superposable concentric discs.

7. Bar according to one of claims 1 to 6 wherein the insulating support (14) of the connecting devices (12) forms a collar (30) at the level of the ends (26, 28) of the connecting insert (24), so that said insert (24) is coated in the insulating material.

8. Bar (10) according to one of claims 1 to 7 wherein the connection surfaces (26, 28) of the inserts (24) of the two connecting devices (12) are parallel and in the same plane.

9. Bar (80) according to one of claims 1 to 7 wherein the connection surfaces (26, 28) of the inserts (24) of the two connecting devices (12) are parallel and offset between the two connecting devices (12) along the axis perpendicular to said surfaces (26, 28), the connecting rod (34) comprising a shoulder (82).

10. Bar (10) according to one of claims 1 to 9 wherein the connecting rod (34) is a flat section the two large surfaces (36) of which are substantially parallel to the connection surfaces (26, 28) of the inserts (24) of the connecting devices (12).

11. Bar (10) according to one of claims 1 to 9 wherein the connecting rod (34) is U-shaped with a central part (86) between its end parts (38) so that, in a view perpendicular to the connection surfaces (26, 28), the central part (86) of the rod (34) is outside the envelope delineated by the two connecting devices (12).

12. Bar (10) according to one of claims 1 to 11 further comprising securing means (48, 50) of the connecting devices (12) in the direction orthogonal to the connection surfaces (26, 28).

13. Bar according to claim 12 wherein the securing means of at least one connecting device (12) comprise a hole (48) within the connecting insert (24).

14. Bar (10) according to one of claims 12 or 13 further comprising a blanking device (52) for a connecting device (12), the blanking device (52) comprising a flat insulating surface superposable on the surface (18) of the support (14) for which it is intended.

15. Bar according to claim 14 wherein the blanking device (52) is provided with an insert (54) comprising a threaded hole (58), the connecting insert (24) of the associated connecting device (12) comprises a hole (48), said bar being associated with a gudgeon-pin (50) operating in conjunction with said holes (58, 48) for the purposes of securing.

16. An omnibus bar comprising several bars according to one of claims 1 to 15 wherein all the connecting devices (12, 12') are superposable.

## Patentansprüche

1. Verbindungs-Stromschiene (10) umfassend
- mindestens zwei Anschlussverbinder (12), die jeweils einen verformbaren Isolierstoff-träger (14) mit zwei einander gegenüberliegenden, annähernd parallelen Verbindungsflächen (16, 18) sowie einen in den Isolierstoffträger (14) integrierten leitenden Verbindungseinsatz (24) mit zwei parallel zueinander angeordneten, in den beiden Verbindungsflächen (16, 18) freiliegenden ebenen Kontaktflächen (26, 28), wobei die Höhe des Einsatzes (24) zwischen den beiden Kontaktflächen (26, 28) bei unbelastetem Isolierstoff des Trägers (14) kleiner ist als der Abstand zwischen den beiden Verbindungsflächen (16, 18) und bei vollständig verformtem Material nach dem Zusammendrücken der beiden Verbindungsflächen (16, 18) größer oder gleich dem genannten Abstand ist,
- eine leitende Stange (34), welche die beiden Verbindungseinsätze (24) der beiden Anschlussverbinder (12) miteinander verbindet, wobei die genannte leitende Stange (34) mit ihren Enden (38) in die Isolierstoffträger (14) der Anschlussverbinder (12) integriert ist und ihr herausstehender Teil (42) von einer Isolierstoffumhüllung (44) umgeben ist,
wobei die Übergänge zwischen den Isolierstoffträgern (14), den leitenden Einsätzen (24), der leitenden Stange (34) und der Isolierstoffumhüllung (44) der Schiene (10) gasdicht ausgebildet sind.

2. Stromschiene nach Anspruch 1, bei der die Verbindungstange (34) einstückig mit den Verbindungseinsätzen (24) und die Isolierstoffträger (14) einstückig mit der Isolierstoffumhüllung (44) der Verbindungsstange (34) ausgebildet sind.

3. Stromschiene nach Anspruch 2, bei der der Isolierstoff (14, 44) als auf die leitenden Elemente (34) aufgeformtes Elastomer ausgebildet ist.

4. Stromschiene nach Anspruch 3, an der zusätzlich auf mindestens einem Teil der Oberfläche der Schiene (10) ein Elastomer mit Füllstoffen aufgeformt ist, das als elektrostatische Abschirmung (20, 46) dient.

5. Stromschiene nach einem der Ansprüche 1 bis 3, an der zusätzlich auf der Oberfläche der Verbindungsschiene (10), ausgenommen auf den Verbindungsflächen (16, 18) und den Kontaktflächen (26, 28) der Anschlussverbinder (12), eine elektrostatische Abschirmung (20, 46) angebracht ist.

6. Stromschiene nach einem der Ansprüche 1 bis 5, bei der die beiden einander gegenüberliegenden Verbindungsflächen (16, 18) sowie die beiden Kontaktflächen (26, 28) mindestens eines Anschlussverbinders (12) als konzentrische Scheiben ausgebildet sind, die vorzugsweise aufeinander gelegt werden können.

7. Stromschiene nach einem der Ansprüche 1 bis 6, bei der der Isolierstoffträger (14) der Anschlussverbinder (12) um die Stirnflächen (26, 28) des Verbindungseinsatzes (24) herum einen Kragen (30) bildet, derart dass der genannte Einsatz (24) vom Isolierstoff überzogen ist.

8. Stromschiene (10) nach einem der Ansprüche 1 bis 7, bei der die Kontaktflächen (26, 28) der Einsätze (24) der beiden Anschlussverbinder (12) parallel zueinander und in der gleichen Achse angeordnet sind.

9. Stromschiene (80) nach einem der Ansprüche 1 bis 7, bei der die Kontaktflächen (26, 28) der Einsätze (24) der beiden Anschlussverbinder (12) parallel und in der senkrecht zu den genannten Kontaktflächen (26, 28) verlaufenden Achse versetzt zueinander angeordnet sind, wobei die Verbindungsstange (34) eine Stufe (82) umfasst.

10. Stromschiene nach einem der Ansprüche 1 bis 9, bei der die Verbindungsstange (34) als Flachstange ausgebildet ist, deren zwei breite Seiten (36) annähernd parallel zu den Kontaktflächen (26, 28) der Einsätze (24) der Anschlussverbinder (12) angeordnet sind.

11. Stromschiene nach einem der Ansprüche 1 bis 10, bei der die Verbindungsstange (34) U-förmig ausgebildet ist und einen zwischen den Endabschnitten (38) angeordneten Mittelabschnitt (86) umfasst, derart dass der Mittelabschnitt (86) der Stange (34) in einer senkrecht zu den Kontaktflächen (26, 28) liegenden Ebene außerhalb der durch die beiden Anschlussverbinder (12) definierten Hüllfläche angeordnet ist.

12. Stromschiene nach einem der Ansprüche 1 bis 11, die zusätzlich Klemmmittel (48, 50) zum Festziehen der beiden Anschlussverbinder (12) in einer rechtwinklig zu den Kontaktflächen (26, 28) verlaufenden Richtung umfasst.

13. Stromschiene nach Anspruch 12, bei der die Klemmmittel mindestens eines Anschlussverbinders (12) eine im Verbindungseinsatz (24) ausgebildete Öffnung (48) umfassen.

14. Stromschiene nach einem der Ansprüche 12 oder 13, die zusätzlich eine Abdeckvorrichtung (52) für einen Anschlussverbinder (12) umfasst, welche Abdeckvorrichtung (52) eine ebene Isolierstofffläche aufweist, die auf die Verbindungsfläche (18) des ihr zugeordneten Trägers (14) aufgesetzt werden kann.

15. Stromschiene nach Anspruch 14, bei der die Abdeckvorrichtung (52) einen Einsatz (54) mit einer darin ausgebildeten Gewindebohrung (58) umfasst und der Verbindungseinsatz (24) des zugeordneten Anschlussverbinders (12) eine Bohrung (48) aufweist, wobei die genannte Schiene einer Stiftschraube (50) zugeordnet ist, die mit den genannten Bohrungen (58, 48) zusammenwirkt, um die Klemmverbindung zu gewährleisten.

16. Anordnung mit mehreren Stromschienen nach einem der Ansprüche 1 bis 15, bei der alle Anschlussverbinder (11, 12) aufeinander gelegt werden können.
